# EUROPÄISCHE PATENTSCHRIFT

(11) **EP 2 378 163 B1**
(45) Veröffentlichungstag und Bekanntmachung des Hinweises auf die Patenterteilung: **23.07.2014**
(21) Anmeldenummer: 11171878.9
(22) Anmeldetag: 11.03.2009
(51) Int. Cl.: F16H 37/08

(54) **Stufenlose Getriebevorrichtung eines Antriebsstranges eines Fahrzeuges**
Infinitely adjustable gear device of a drive train of a vehicle
Dispositif d'engrenage en continu d'un conducteur de commande d'un véhicule

(30) Priorität: 23.04.2008 DE 102008001326
(43) Veröffentlichungstag der Anmeldung: 19.10.2011
(62) Teilanmeldung aus: 09735821.2
(73) Patentinhaber: ZF Friedrichshafen AG, 88038 Friedrichshafen (DE)
(72) Erfinder: Sich, Bernhard, 88045 Friedrichshafen (DE)

(56) Entgegenhaltungen:
- EP-A- 1 528 285
- US-A- 6 045 477
- US-A- 6 056 661
- US-A1- 2006 183 590

## Beschreibung

Die Erfindung betrifft eine stufenlose Getriebevorrichtung eines Antriebsstranges eines Fahrzeuges mit einem Variator und einer Schaltgetriebeeinrichtung gemäß der im Oberbegriff des Patentanspruches 1 näher definierten Art.

Aus der US 2006/0183590 A1 ist eine stufenlose Getriebevorrichtung mit Leistungsverzweigung bekannt. Die Leistungsverzweigung wird über eine getriebeeingangsseitig angeordnete Planetengetriebeeinrichtung realisiert, wobei ein erster Leistungspfad der Getriebeeinrichtung mit einem Sonnenrad der Planetengetriebeeinrichtung und ein zweiter Leistungspfad über ein Hohlrad der Planetengetriebeeinrichtung mit Drehmoment versorgt werden. Das Sonnenrad der Planetengetriebeeinrichtung ist über eine Stirnradverzahnung mit einer ersten Welle des Variators wirkverbunden. Eine zweite Welle des Variators ist mit einer vorliegend als Vorgelegegetriebe ausgebildeten Schaltgetriebeeinrichtung verbunden, in deren Bereich die über die beiden Leistungspfade der Getriebevorrichtung geführten Drehmomente aufsummiert werden und über einen Getriebeausgang aus der Getriebevorrichtung geführt werden.

Nachteilhafterweise weist die Getriebevorrichtung einen hohen Bauraumbedarf auf, da die Schaltgetriebeeinrichtung zwischen der Planetengetriebeeinrichtung und dem Variator angeordnet ist. Zusätzlich ist die Wirkverbindung zwischen dem Sonnenrad der Planetengetriebeeinrichtung und der ersten Welle des Variators mit einer unerwünscht langen Verbindungswelle auszuführen, die nur mittels einer konstruktiv aufwändigen und hohe Herstellkosten verursachenden Lagerung in der Getriebeeinrichtung verwendbar ist.

Die gattungsgemäße EP 1 528 285 A beschreibt eine stufenlose Getriebevorrichtung eines Fahrzeugantriebsstranges mit einem Variator und einer Schaltgetriebeeinrichtung, mittels welchen Übersetzungen mehrerer Übersetzungsbereiche stufenlos darstellbar sind. Die beschriebene Getriebevorrichtung umfasst eine Planetengetriebeeinrichtung, die im Bereich einer ersten Welle mit einem Getriebeeingang, im Bereich einer zweiten Welle mit der Schaltgetriebeeinrichtung und im Bereich einer dritten Welle mit dem Variator in Wirkverbindung steht. Dabei kann ein zu übertragendes Drehmoment über zwei Leistungspfade zwischen dem Getriebeeingang und einem Getriebeausgang geführt werden. Der Variator ist zumindest teilweise in einem der beiden Leistungspfade angeordnet und die Schaltgetriebeeinrichtung ist zwischen dem Variator und einem Getriebeausgang angeordnet.

Der vorliegenden Erfindung liegt daher die Aufgabe zugrunde, eine stufenlose Getriebevorrichtung zur Verfügung zu stellen, die einen einfachen konstruktiven Aufbau und einen geringen Bauraumbedarf aufweist, sowie kostengünstig herstellbar ist.

Erfindungsgemäß wird diese Aufgabe mit einer stufenlosen Getriebevorrichtung mit den Merkmalen des Patentanspruches 1 gelöst.

Die erfindungsgemäße stufenlose Getriebevorrichtung eines Fahrzeugantriebsstranges umfasst einen Variator und eine Schaltgetriebeeinrichtung, mittels welcher Übersetzungen mehrerer Übersetzungsbereiche stufenlos darstellbar sind, und eine Planetengetriebeeinrichtung, die im Bereich einer ersten Welle mit einem Getriebeeingang, im Bereich einer zweiten Welle mit einer Schaltgetriebeeinrichtung und im Bereich einer dritten Welle mit dem Variator in Wirkverbindung steht, wobei ein zu übertragendes Drehmoment über wenigstens zwei Leistungspfade zwischen dem Getriebeeingang und einem Getriebeausgang führbar ist und der Variator in einem der beiden Leistungspfade angeordnet ist. Die Schaltgetriebeeinrichtung ist zwischen dem Variator und einem Getriebeausgang angeordnet.

Das über die stufenlose Getriebevorrichtung nach der Erfindung zu führende bzw. zu übertragende Drehmoment ist erfindungsgemäß im Bereich der Planetengetriebeeinrichtung zwischen den beiden Leistungspfaden aufteilbar und im Bereich der Schaltgetriebeeinrichtung aufsummierbar.

Mittels der Anordnung der Schaltgetriebeeinrichtung zwischen dem Variator und einem Getriebeausgang ist die Wirkverbindung zwischen der Planetengetriebeeinrichtung und dem Variator im Vergleich zu der aus dem Stand der Technik bekannten Getriebevorrichtung mit einer kürzeren Verbindungswelle ausführbar, deren Lagerung konstruktiv einfacher und kostengünstiger realisierbar ist.

Zusätzlich ist die stufenlose Getriebevorrichtung durch die vorgeschlagene Anordnung der Schaltgetriebeeinrichtung durch eine im Vergleich zu der bekannten Getriebevorrichtung kompaktere Getriebebauweise gekennzeichnet und weist daher einen geringeren Bauraumbedarf auf.

Bei einer vorteilhaften Weiterbildung der erfindungsgemäßen stufenlosen Getriebevorrichtung ist die erste Welle der Planetengetriebeeinrichtung als Hohlrad ausgebildet, womit die Getriebevorrichtung nach der Erfindung im Vergleich zu der aus der US 2006/0183590 A1 bekannten Getriebevorrichtung durch eine verbesserte Übersetzungsanpassung gekennzeichnet ist.

Der Variator der stufenlosen Getriebevorrichtung nach der Erfindung ist bei weiteren Ausführungsformen entweder als Umschlingung- oder als Reibradvariator oder eine andere Variatorbauart, z. B. Hydrostat, ausgeführt, womit spezifische Vorteile der verschiedenen Varianten des Variators in Abhängigkeit des jeweils vorliegenden Anwendungsfalles eingesetzt und jeweils darauf abgestimmt nutzbar sind. So wird der Variator beispielsweise als Reibradvariator ausgeführt, wenn anforderungsgemäß über die Getriebevorrichtung nach der Erfindung ein größerer Drehzahlbereich abzudecken ist.

Eine kostengünstig herstellbare, einen konstruktiv einfachen Aufbau aufweisende und durch einen geringen Bauraumbedarf gekennzeichnete Ausführungsform der stufenlosen Getriebevorrichtung nach der Erfindung ist dadurch gekennzeichnet, dass eine der Variatorwellen auf einer Getriebehauptwelle angeordnet ist, da ein über die Getriebevorrichtung zu führendes Drehmoment von der Planetengetriebeeinrichtung ohne zusätzliche Zahnradstufen in den Variator einleitbar ist.

Bei einer weiteren kostengünstigen Ausführungsform der erfindungsgemäßen stufenlosen Getriebevorrichtung ist die Schaltgetriebeeinrichtung bereichsweise als eine Windungsgetriebeeinheit ausgeführt, mittels welcher im Vergleich zu herkömmlichen Schaltgetriebeeinrichtungen mit einer geringeren Anzahl an Zahnrädern zumindest dieselbe Anzahl an Übersetzungsstufen darstellbar ist.

Eine ebenfalls bauraum- und kostengünstige sowie konstruktiv einfache Ausführungsform der stufenlosen Getriebevorrichtung nach der Erfindung ist dadurch gekennzeichnet, dass das zu übertragende Drehmoment in einem der Fahrbereiche nur über einen der Leistungspfade geführt wird. Diese Ausführungsform der Getriebevorrichtung zeichnet sich im Vergleich zu aus der Praxis bekannten Getriebevorrichtungen ebenfalls durch eine geringere Anzahl der Verzahnungen aus.

Eine kostengünstig herstellbare und mit einem guten Wirkungsgrad betreibbare Ausführungsform der stufenlosen Getriebevorrichtung nach der Erfindung ist mit zur Umschaltung zwischen den Fahrbereichen vorgesehenen formschlüssigen Schaltelementen ausgebildet.

Um insbesondere in einem ersten für einen Anfahrvorgang vorgesehenen Fahrbereich ein hohes Anfahrdrehmoment zur Verfügung stellen zu können, ist die Wirkverbindung zwischen der dritten Welle der Getriebeeinrichtung und dem Variator bei einer vorteilhaften Weiterbildung der Getriebeeinrichtung mit wenigstens einer Stirnradstufe ausgebildet.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispielen, wobei zugunsten der Übersichtlichkeit in der Beschreibung der Ausführungsbeispiele für bau- und funktionsgleiche Bauteile dieselben Bezugszeichen verwendet werden.

Es zeigt:
Fig. 1 ein Räderschema eines ersten Ausführungsbeispieles der stufenlosen Getriebevorrichtung nach der Erfindung;
Fig. 2 ein zweites Ausführungsbeispiel der Getriebevorrichtung nach der Erfindung, bei der eine Welle des Variators auf einer Getriebehauptwelle angeordnet ist;
Fig. 3 ein Räderschema einer dritten Ausführungsform der Getriebevorrichtung nach der Erfindung, welches einen Reibradvariator aufweist;
Fig. 4 ein viertes Ausführungsbeispiel der Getriebevorrichtung in einer Fig. 1 entsprechenden Darstellung, bei dem eine Welle des als Reibradvariator ausgebildeten Variators auf der Getriebehauptwelle angeordnet ist;
Fig. 5 ein Räderschema eines mit einem Plusplanetenradsatz ausgebildeten fünften Ausführungsbeispieles der Getriebevorrichtung;
Fig. 6 ein sechstes Ausführungsbeispiel der Getriebevorrichtung, bei welcher eine Welle des Variators auf der Getriebehauptwelle angeordnet ist;
Fig. 7 ein Räderschema eines siebten Ausführungsbeispieles, wobei ein Hohlrad und ein Planetenträger der Planetengetriebeeinrichtung drehfest miteinander verbindbar sind;
Fig. 8 ein Räderschema eines achten Ausführungsbeispieles der erfindungsgemäßen Getriebevorrichtung, bei der ein Planetenträger der Planetengetriebeeinrichtung drehfest darstellbar ist; und
Fig. 9 ein neuntes mit einem Reibradvariator ausgebildetes Ausführungsbeispiel der Getriebevorrichtung nach der Erfindung.

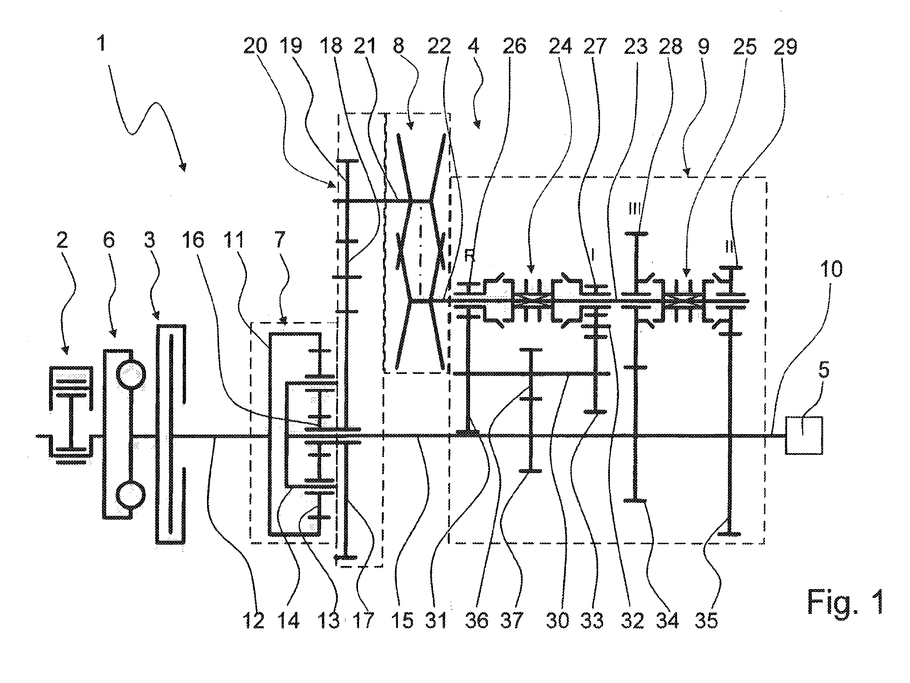

In Fig. 1 ist ein Fahrzeugantriebsstrang 1 in stark schematisierter Form gezeigt, welcher eine Antriebsmaschine 2, ein Anfahrelement 3, eine Getriebevorrichtung 4 und einen Abtrieb 5 umfasst. Zwischen der Antriebsmaschine 2 und dem vorliegend als reibschlüssige Kupplung ausgebildeten Anfahrelement 3 ist ein so genannter Schwingungsdämpfer 6 angeordnet, mittels welchem Drehungleichförmigkeiten der vorliegend als Brennkraftmaschine ausgeführten Antriebsmaschine 2 dämpfbar sind.

Die Getriebevorrichtung 4 ist als stufenloses leistungsverzweigtes Getriebe ausgeführt, das getriebeeingangsseitig eine Planetengetriebeeinrichtung 7, die als Minusplanetensatz ausgebildet ist, und getriebeausgangsseitig eine Schaltgetriebeeinrichtung 9 aufweist, wobei die Schaltgetriebeeinrichtung 9 zwischen einem vorliegend als Umschlingungsvariator ausgeführten Variator 8 und einem Getriebeausgang 10 bzw. dem Abtrieb 5 des Fahrzeugantriebsstranges 1 angeordnet ist.

Eine als Hohlrad ausgebildete erste Welle 11 der Planetengetriebeeinrichtung 7 ist über eine Getriebeeingangswelle 12, das Anfahrelement 3 und den Schwingungsdämpfer 6 mit der Antriebsmaschine 2 verbunden, womit ein Antriebsmoment der Antriebsmaschine 2 über die Getriebeeingangswelle 12 und das Hohlrad 11 in die Getriebevorrichtung 4 eingeleitet wird.

Über mit dem Hohlrad 11 kämmende Planetenräder 13 und eine vorliegend als Planetenträger ausgeführte zweite Welle 14 der Planetengetriebeeinrichtung 7 wird ein Teil des Antriebsmomentes der Antriebsmaschine 2 auf eine mit der zweiten Welle 14 der Planetengetriebeeinrichtung 7 drehfest verbundene Getriebehauptwelle 15 in Richtung der Schaltgetriebeeinrichtung 9 weitergeleitet.

Gleichzeitig ist die Planetengetriebeeinrichtung 7 über eine vorliegend als Sonnenrad ausgebildete dritte Welle 16 und drei miteinander kämmende Zahnräder 17, 18 und 19 aufweisende Stirnradverzahnung 20 mit einer ersten Welle 21 des Variators 8 wirkverbunden, die vorliegend beabstandet und parallel zur Getriebehauptwelle 15 angeordnet ist.

Eine zweite Welle 22 des Variators 8 ist mit einer Vorgelegewelle 23 der Schaltgetriebeeinrichtung 9 verbunden, auf welcher mehrere über Schaltelemente 24, 25 drehfest mit der Vorgelegewelle 23 verbindbare Losräder 26 bis 29 drehbar gelagert sind. Die Schaltelemente 24 und 25 sind vorliegend als formschlüssige Schaltelemente ausgeführt, die in Abhängigkeit des jeweils vorliegenden Anwendungsfalles vorzugsweise Klauen, Synchronisierungen oder Kombinationen aus jeweils einer Klauenkupplung und einer zusätzlichen Synchronisierung sein können.

Das Losrad 26 kämmt mit einem drehfest mit einer weiteren Vorgelegewelle 30 verbundenen Zahnrad 31, während das Losrad 27 mit einem Zwischenrad kämmt, das wiederum in Eingriff mit einem ebenfalls drehfest mit der weiteren Vorgelegewelle 30 verbundenen Zahnrad 33 in Eingriff steht. Die Losräder 28 und 29 kämmen wiederum mit drehfest mit der Getriebehauptwelle 15 verbundenen Zahnrädern 34, 35. Mit der weiteren Vorgelegewelle 30 ist ein zusätzliches Zahnrad 36 drehfest verbunden, welches mit einem mit der Getriebehauptwelle 15 drehfest verbundenen weiteren Zahnrad 37 kämmt.

Mit der Getriebevorrichtung 4 sind drei Fahrbereiche für Vorwärtsfahrt und ein Fahrbereich für Rückwärtsfahrt darstellbar, wobei die Übersetzungsbereiche der Fahrbereiche über den vorliegend als Umschlingungsvariator ausgebildeten Variator 8 stufenlos durchfahren werden. Eine Umschaltung zwischen den Fahrbereichen der Getriebevorrichtung 4 erfolgt über die beiden Schaltelemente 24 und 25. Dabei ist der erste Fahrbereich für Vorwärtsfahrt in der Getriebevorrichtung 4 eingelegt, wenn das Losrad 27 über das Schaltelement 24 drehfest mit der Vorgelegewelle 23 verbunden ist. Der zweite Fahrbereich wird durch drehfestes Verbinden über das Schaltelement 25 mit der Vorgelegewelle 23 in der Getriebevorrichtung 4 eingelegt, während der dritte Fahrbereich bei über das Schaltelement 25 drehfest mit der Vorgelegewelle 23 verbundenem Losrad 28 zur Verfügung steht. Der Fahrbereich für Rückwärtsfahrt ist in der Getriebevorrichtung 4 eingelegt, wenn das Losrad 26 über das Schaltelement 24 drehfest mit der Vorgelegewelle 23 verbunden ist.

Um eine Änderung der Übersetzung der Getriebevorrichtung 4 auch bei einem Umschalten zwischen den drei Fahrbereichen für Vorwärtsfahrt stufenlos durchführen zu können, wird der Variator während eines Schaltvorganges nicht notwendigerweise zurückgestellt, womit die Umschaltungen zwischen den Fahrbereichen nicht synchron durchgeführt werden.

Grundsätzlich ist die vorbeschriebene räumliche Anordnung der Planetengetriebeeinrichtung 7, der Stirnradverzahnung 20 und des Variator 8 im Getriebegehäuse der Getriebevorrichtung 4 frei wählbar, wobei die Anbindung zwischen der Planetengetriebeeinrichtung 7 und der Stirnradverzahnung 20 bzw. zwischen der Planetengetriebeeinrichtung 7 und dem Variator 8 im Bereich der dritten Welle 16 bzw. dem Sonnenrad der Planetengetriebeeinrichtung 7 im Wesentlichen in der selben Art und Weise erfolgt.

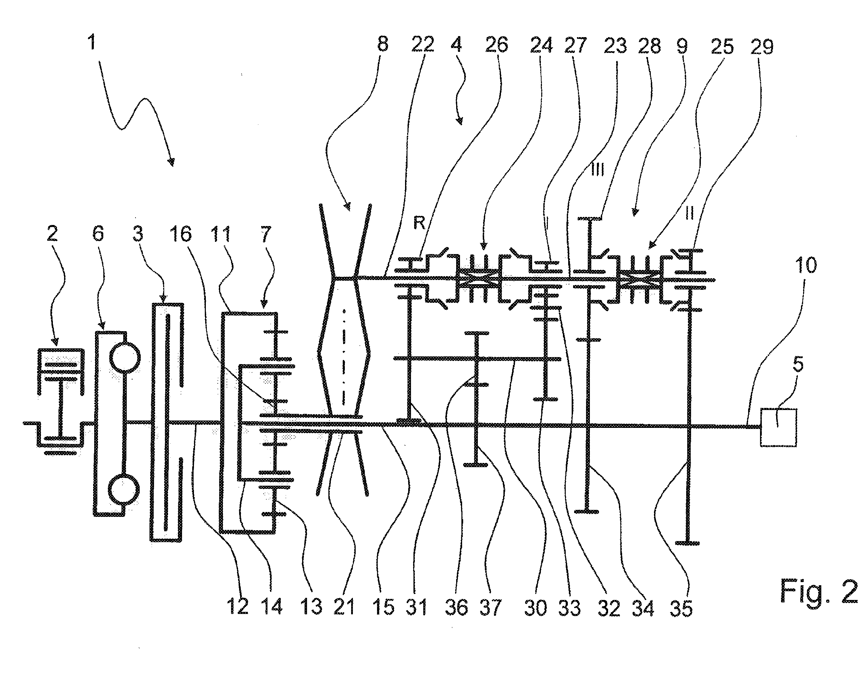

In Fig. 2 bis Fig. 9 sind weitere Ausführungsbeispiele der Getriebevorrichtung 4 dargestellt, die sich jeweils in Teilbereichen der Getriebevorrichtung 4 von dem in Fig. 1 dargestellten ersten Ausführungsbeispiel der Getriebevorrichtung 4 unterscheiden, weshalb in der nachfolgenden Beschreibung zu Fig. 2 bis Fig. 9 im Wesentlichen auf die Unterschiede zwischen den einzelnen Ausführungsformen der Getriebevorrichtung 4 eingegangen wird und bezüglich der grundsätzlichen Funktionsweise der Getriebevorrichtung 4 auf die Beschreibung zu Fig. 1 verwiesen wird.

Bei dem in Fig. 2 dargestellten Ausführungsbeispiel der Getriebevorrichtung 4 ist die erste Welle 21 des Variators 8 direkt auf der Getriebehauptwelle 15 angeordnet und mit der dritten Welle 16 bzw. dem Sonnenrad der Planetengetriebeeinrichtung 7 verbunden, womit die Stirnradverzahnung 20 der Getriebevorrichtung gemäß Fig. 1 nicht erforderlich ist und die Getriebevorrichtung 4 gemäß Fig. 2 in radialer Richtung einen geringeren Bauraumbedarf aufweist, durch ein niedrigeres Gesamtgewicht gekennzeichnet ist sowie kostengünstiger herstellbar ist.

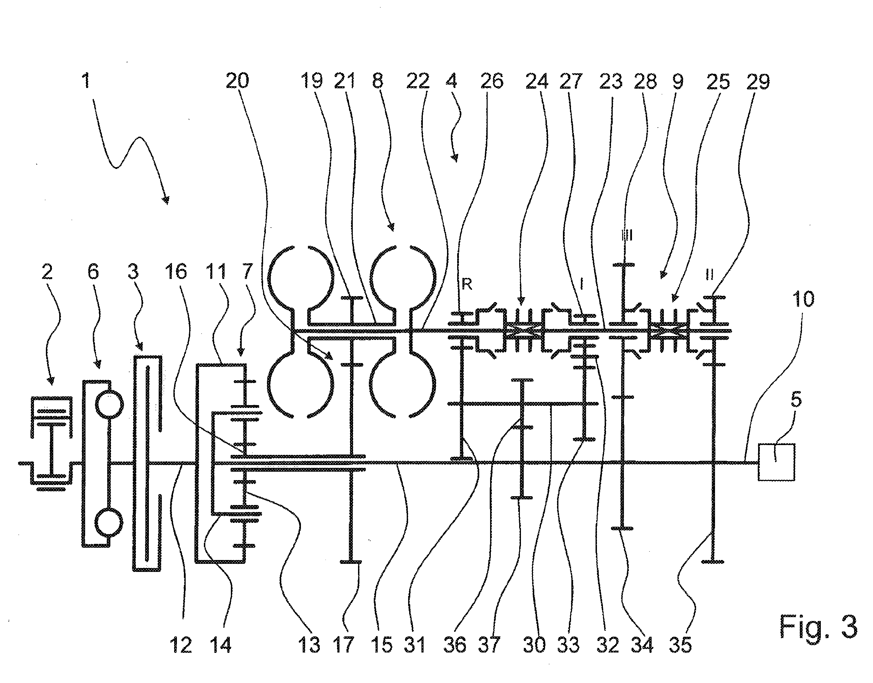

Die in Fig. 3 dargestellte dritte Ausführungsform der Getriebevorrichtung 4 weist im Unterschied zu den beiden Ausführungsbeispielen gemäß Fig. 1 und Fig. 2 einen als Reibradvariator ausgebildeten Variator 8 auf, dessen erste Welle 21 und dessen zweite Welle 22 koaxial zu der Vorgelegewelle 23 angeordnet ist. Die die dritte Welle 16 der Planetengetriebeeinrichtung 7 mit der ersten Welle 21 des Variators 8 verbindende Stirnradverzahnung 20 ist ohne das Zahnrad bzw. das Zwischenrad 18 ausgebildet, sodass die Getriebevorrichtung 4 gemäß Fig. 3 in radialer Richtung ebenfalls einen geringeren Bauraumbedarf aufweist als die Ausführungsform gemäß Fig. 1.

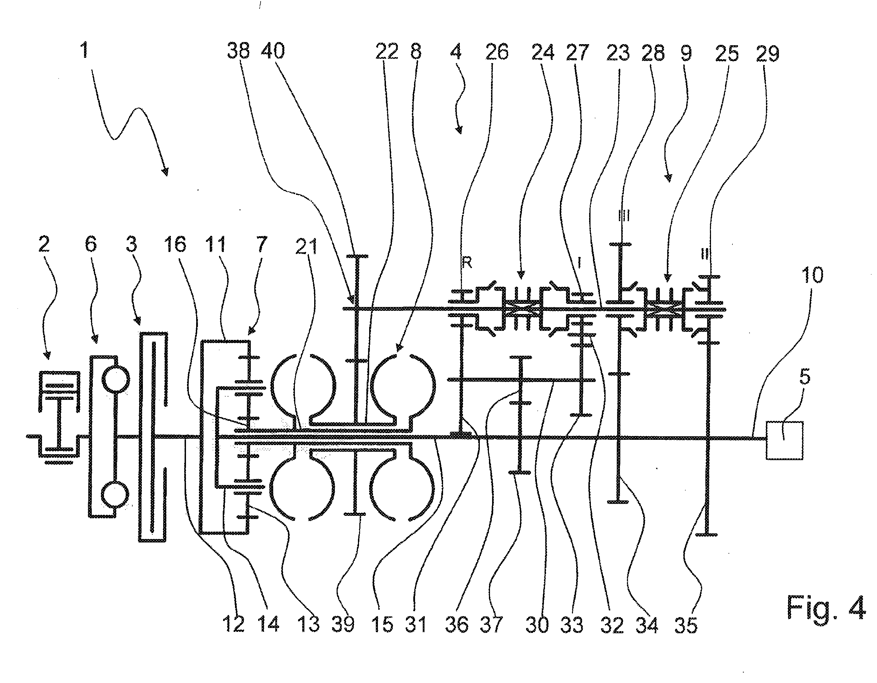

Das in Fig. 4 dargestellte Ausführungsbeispiel der Getriebevorrichtung 4 ist ebenfalls mit einem Reibradvariator ausgebildet, der auf der Getriebehauptwelle 15 angeordnet ist, wobei die zweite Welle 22 des Variators 8 über eine weitere Stirnradverzahnung 38, die ein erstes Stirnrad 39 und ein zweites Stirnrad 40 umfasst, mit der Vorgelegewelle 23 der Schaltgetriebeeinrichtung 9 in Wirkverbindung steht. Das vierte Ausführungsbeispiel der Getriebevorrichtung 4 ist im Vergleich zu dem in Fig. 1 dargestellten ersten Ausführungsbeispiel der Getriebevorrichtung 4 durch einen in radialer Richtung geringeren Bauraumbedarf gekennzeichnet.

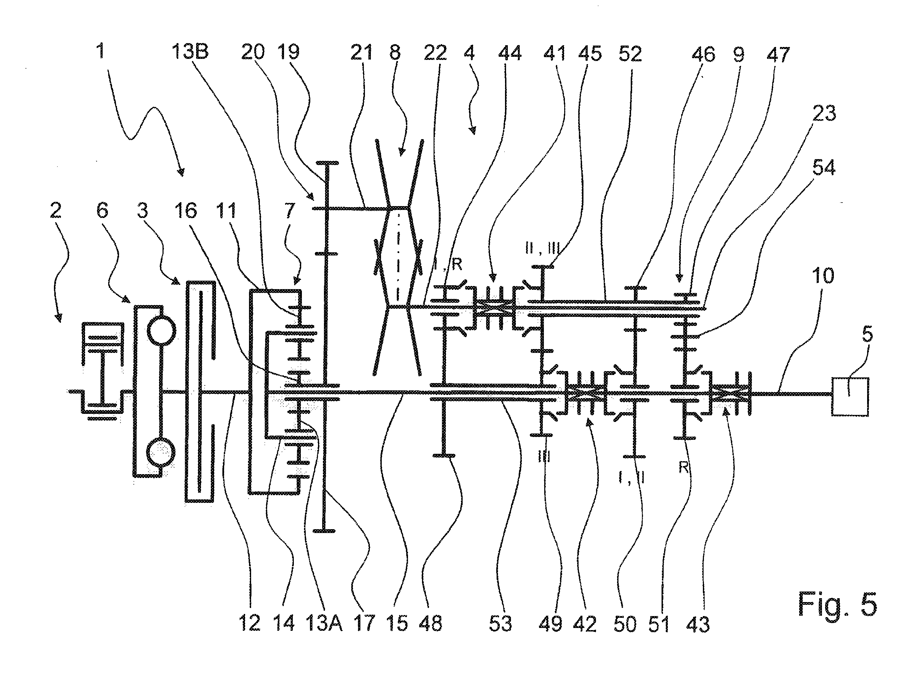

Fig. 5 zeigt ein fünftes Ausführungsbeispiel der Getriebevorrichtung 4, bei dem die dritte Welle 16 der Planetengetriebeeinrichtung 7, die als Plusplanetensatz ausgeführt ist, über die Stirnradverzahnung 20, die im Vergleich zu der Stirnradverzahnung 20 gemäß Fig. 1 ebenfalls ohne das Zwischenrad 18 ausgebildet ist, mit der ersten Welle 21 des als Umschlingungsvariator ausgeführten Variators verbunden ist. Die Planetengetriebeeinrichtung 7 umfasst vorliegend Doppelplaneten 13A und 13B, um die über das Zwischenrad 18 realisierte Drehrichtungsumkehr bereits im Bereich der Planetengetriebeeinrichtung 7 zur Verfügung zu stellen.

Des Weiteren ist die Schaltgetriebeeinrichtung 9 gemäß Fig. 5 abweichend von den Schaltgetriebeeinrichtungen 9 der Ausführungsbeispiele der Getriebevorrichtung 4 gemäß Fig. 1 bis Fig. 4 mit einer Windungsgetriebeeinheit und mit drei Schaltelementen 41, 42 und 43 ausgestaltet. Über das Schaltelement 41 sind auf der Vorgelegewelle 23 angeordnete Losräder 44, 45, 46 und 47 drehfest mit der Vorgelegewelle 43 verbindbar, während mittels des Schaltelementes 42 auf der Getriebehauptwelle 15 angeordnete Losräder 48, 49 und 50 drehfest mit dieser koppelbar sind. Das Schaltelement 43 ist zur Herstellung einer drehfesten Verbindung zwischen dem auf der Getriebehauptwelle 15 angeordneten Losrad 51 und der Getriebehauptwelle 15 vorgesehen. Sowohl die Losräder 45, 46 und 47 als auch die Losräder 48 und 49 sind jeweils über Hohlwellen 52, 53 drehfest miteinander verbunden, während die Losräder 44 bzw. 50 und 51 als separate Zahnräder ausgeführt sind. Das auf der Vorgelegewelle 23 angeordnete Losrad 44 kämmt mit dem über die Hohlwelle 53 mit dem Losrad 49 drehfest verbundenen Losrad 48, während das Losrad 45 mit dem Losrad 49 kämmt. Das Losrad 46 steht in Eingriff mit dem Losrad 50 und das Losrad 47 steht über ein Zwischenrad 54 mit dem Losrad 51 in Wirkverbindung.

Der erste Fahrbereich für Vorwärtsfahrt ist in der Getriebevorrichtung 4 eingelegt, wenn das Losrad 44 über das Schaltelement 41 drehfest mit der Vorgelegewelle 23 und das Losrad 50 gleichzeitig über das Schaltelement 42 drehfest mit der Getriebehauptwelle 15 verbunden ist. Um in der Getriebevorrichtung 4 den zweiten Fahrbereich für Vorwärtsfahrt einzulegen, ist das Losrad 45 über das Schaltelement 41 drehfest mit der Vorgelegewelle 23 und das Losrad 50 über das Schaltelement 42 drehfest mit der Getriebehauptwelle 15 zu verbinden. Der dritte Fahrbereich für Vorwärtsfahrt ist dann in der Getriebevorrichtung 4 eingelegt, wenn das Losrad 49 über das Schaltelement 42 mit der Getriebehauptwelle 15 und das Losrad 45 über das Schaltelement 41 mit der Vorgelegewelle 23 drehfest verbunden ist. Liegt eine Anforderung zum Einlegen des Fahrbereiches für Rückwärtsfahrt vor, wird das Losrad 44 über das Schaltelement 41 drehfest mit der Vorgelegewelle 23 und das Losrad 51 über das Schaltelement 43 drehfest mit der Getriebehauptwelle 15 verbunden.

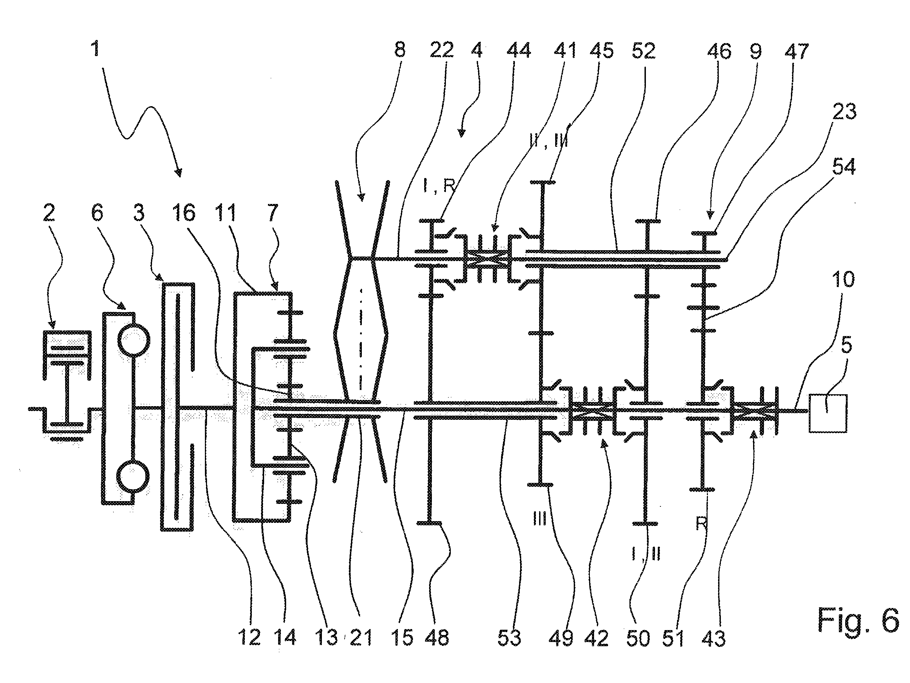

Das in Fig. 6 dargestellte sechste Ausführungsbeispiel der Getriebevorrichtung 4 unterscheidet sich von dem in Fig. 5 dargestellten fünften Ausführungsbeispiel der Getriebevorrichtung 4 darin, dass die erste Welle 21 des Variators 8 direkt auf der Getriebehauptwelle 15 angeordnet ist und die Übertragung des Drehmomentes zwischen der Planetengetriebeeinrichtung 7 und dem Variator 8 ohne die Stirnradverzahnung 20 erfolgt, womit die Ausführungsform der Getriebevorrichtung 4 gemäß Fig. 6 in radialer Richtung einen geringeren Bauraumbedarf aufweist als die Getriebevorrichtung 4 gemäß Fig. 5.

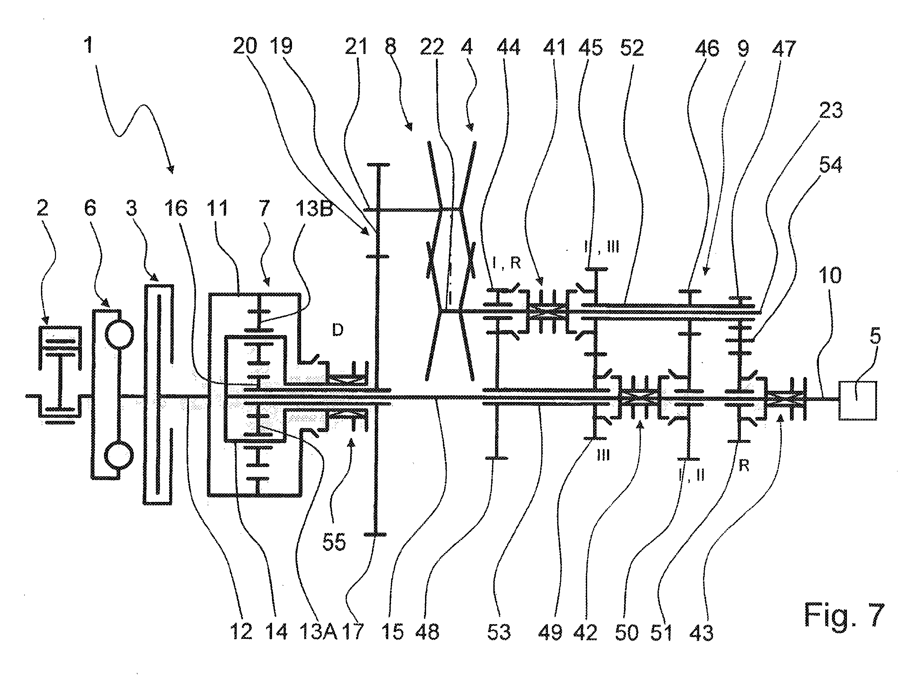

In Fig. 7 ist eine Weiterbildung des in Fig. 5 dargestellten fünften Ausführungsbeispieles der Getriebevorrichtung 4 gezeigt, wobei bei der Getriebevorrichtung gemäß Fig. 7 die erste Welle 11 bzw. das Hohlrad der Planetengetriebeeinrichtung 7 über ein Schaltelement 55 drehfest mit der zweiten Welle 14 bzw. dem Planetenträger der Planetengetriebeeinrichtung 7 verbindbar ist. Mittels der verblockten Planetengetriebeeinrichtung 7 bzw. dem gesperrten Eingangsdifferential ist auf einfache und kostengünstige Weise ein zusätzlicher Direktgang in der Getriebevorrichtung 4 darstellbar.

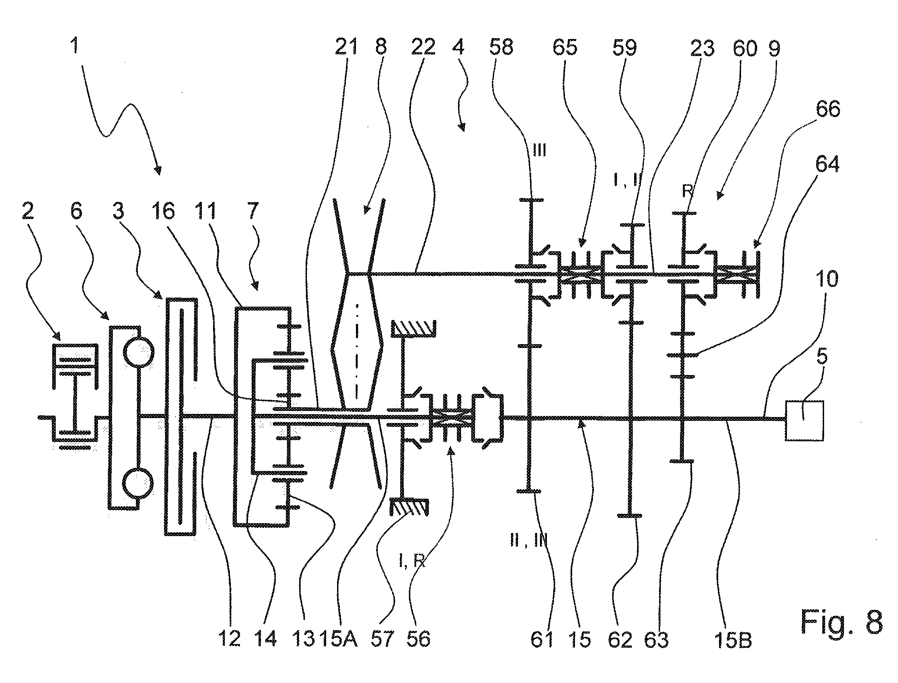

Das in Fig. 8 dargestellte achte Ausführungsbeispiel der Getriebevorrichtung 4 ist mit einer weiteren Ausführungsform der Schaltgetriebeeinrichtung 9 ausgebildet. Zusätzlich ist der Planetenträger 14 der Planetengetriebeeinrichtung 7 über ein Schaltelement 56 mit einem gehäusefesten Bauteil 57 in Wirkverbindung bringbar und somit betriebszustandsabhängig gehäuseseitig abstützbar, um sowohl den ersten Fahrbereich für Vorwärtsfahrt als auch den Fahrbereich für Rückwärtsfahrt in der Getriebevorrichtung 4 jeweils als Direktgänge ohne Leistungsverzweigung darstellen zu können. Die Planetengetriebeeinrichtung 7 wird als feste Übersetzung genutzt, wobei der Planetenträger 14 hierzu drehfest mit dem Gehäuse 57 der Getriebevorrichtung 4 verbunden wird.

Zur Darstellung der Fahrbereiche für Vorwärtsfahrt und für Rückwärtsfahrt ist die Schaltgetriebeeinrichtung 9 mit mehreren auf der Vorgelegewelle 23 angeordneten Losrädern 58, 59 und 60 sowie drei drehfest auf der Getriebehauptwelle 15 angeordneten Zahnrädern 61, 62 und 63 ausgeführt, wobei das Zahnrad 61 mit dem Losrad 58 und das Losrad 59 mit dem Zahnrad 62 kämmt. Das Losrad 60 steht mit dem Zahnrad 63 über ein Zwischenrad 64 in Wirkverbindung.

Die Losräder 58 und 59 sind über ein Schaltelement 65 und das Losrad 60 ist über ein weiteres Schaltelement 66 drehfest mit der Vorgelegewelle 23 verbindbar, wobei zur Darstellung des unteren bzw. des ersten Fahrbereiches für Vorwärtsfahrt neben der drehfesten Koppelung des Planetenträgers 14 der Planetengetriebeeinrichtung 7 mit dem gehäusefesten Bauteil 57 zusätzlich das Losrad 59 über das Schaltelement 65 mit der Vorgelegewelle 23 drehfest zu verbinden ist.

Liegt eine Schaltanforderung zum Einlegen des zweiten Fahrbereiches für Vorwärtsfahrt vor, der bei allen Ausführungsbeispielen einen mittleren Fahrbereich darstellt, ist der planetengetriebeeinrichtungsseitige erste Teil 15A der Getriebehauptwelle 15 mit dem getriebeausgangsseitigen zweiten Teil 15B der Getriebehauptwelle 15 im Bereich des Schaltelementes 56 drehfest miteinander zu verbinden. Gleichzeitig ist das Losrad 59 über das Schaltelement 65 mit der Vorgelegewelle 23 zu koppeln, wobei in dieser Schaltstellung des Schaltelementes 56 der Planetenträger 14 der Planetengetriebeeinrichtung 7 vom gehäusefesten Bauteil 57 abgekoppelt ist.

Um den sich an den zweiten Fahrbereich anschließenden dritten Fahrbereich für Vorwärtsfahrt in der Getriebevorrichtung 4 gemäß Fig. 8 einzulegen, sind die beiden im Bereich des Schaltelementes 56 voneinander entkoppelbaren Teile 15A und 15B der Getriebehauptwelle 15 drehfest miteinander zu verbinden und zusätzlich das Losrad 58 über das Schaltelement 65 drehfest mit der Vorgelegewelle 23 zu verbinden. Zur Darstellung des Fahrbereiches für Rückwärtsfahrt ist der Planetenträger 14 über das Schaltelement 56 mit dem gehäusefesten Bauteil 57 zu verbinden und gleichzeitig das Losrad 60 über das Schaltelement 66 mit der Vorgelegewelle 23 zu koppeln.

In dieser Schaltstellung des Schaltelementes 56 ist die Getriebehauptwelle 15 im Bereich des Schaltelementes 56 getrennt, womit das über die Getriebeeingangswelle 12 anstehende Antriebsmoment der Antriebsmaschine 2 vollständig über den Variator 8 in die Schaltgetriebeeinrichtung 9 eingeleitet und in Richtung des Abtriebs 5, das heißt ohne Leistungsverzweigung, weitergeführt wird.

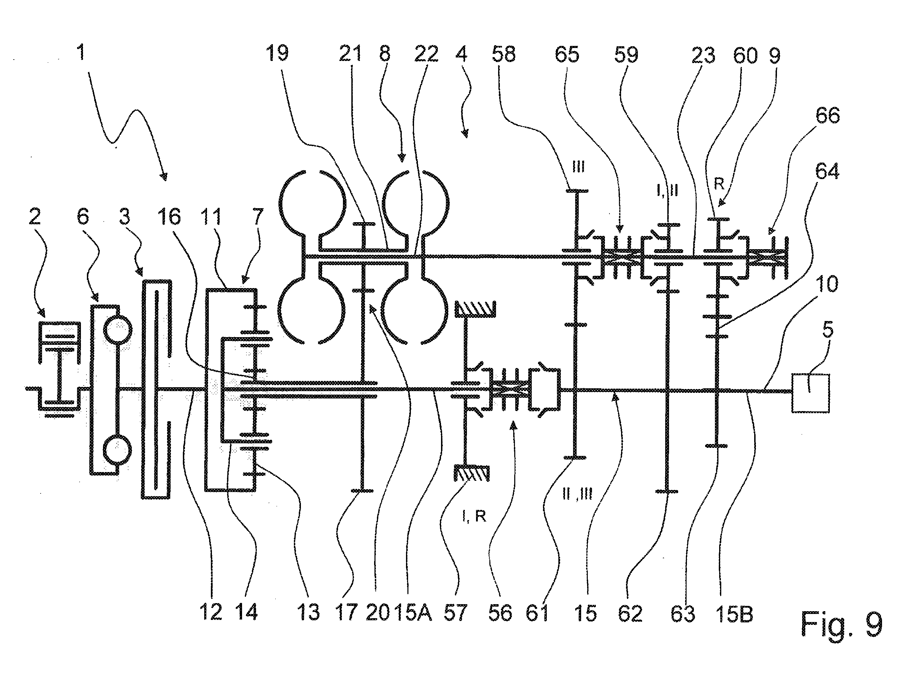

Das in Fig. 9 dargestellte neunte Ausführungsbeispiel der Getriebevorrichtung 4 unterscheidet sich von dem in Fig. 8 dargestellten Ausführungsbeispiel der Getriebevorrichtung 4 im Bereich des Variators 8, der als Reibradvariator ausgeführt ist und der von der Getriebehauptwelle 15 beabstandet und koaxial zur Vorgelegewelle 23 angeordnet ist.

Alle in der Zeichnung dargestellten Ausführungsbeispiele der erfindungsgemäßen Getriebevorrichtung stellen prinzipielle Ausführungsmöglichkeiten eines stufenlosen Getriebes mit mehreren Fahrbereichen dar, die mit drehmomentstarken LKW-Motoren kombinierbar sind. Der Einsatz von Umschlingungsvariatoren, mittels welchen üblicherweise geringere Drehmomente übertragbar sind als von LKW-Motoren erzeugt werden, ist durch die vorbeschriebene Leistungsteilung im Bereich der Planetengetriebeeinrichtung möglich..

Durch die Leistungsteilung und den Ansatz, dass die Umschaltung in der Getriebevorrichtung zwischen den Fahrbereichen nicht synchron abläuft und der Variator während der Umschaltung zwischen zwei Fahrbereichen komplett zurückgestellt wird, wird eine Belastung im Bereich des Variators im Vergleich zu bekannten stufenlosen Getrieben ohne Leistungsteilung erheblich reduziert.

Darüber hinaus ist die erfindungsgemäße Getriebevorrichtung mit einem hohen Wirkungsgrad betreibbar, da die verschiedenen Fahrbereiche mit einer geringen Anzahl an Zahneingriffen darstellbar sind, wobei ein Verbrauch einer Antriebsmaschine eines Fahrzeugantriebsstranges, der mit der Getriebevorrichtung ausgebildet ist, im Vergleich zu aus der Praxis bekannten Fahrzeugantriebssträngen reduziert ist.

Aufgrund der Anordnung der Planetengetriebeeinrichtung zwischen dem Antrieb der Antriebsmaschine und dem Variator ist das über den Variator zu führende Drehmoment bei entsprechender Auslegung der Übersetzung der Planetengetriebeeinrichtung im Vergleich zu bekannten Getriebevorrichtungen reduziert und die Drehzahl vergrößert, womit die Belastung im Bereich des Variators reduziert ist. Die Übersetzungsstufen im Bereich der Schaltgetriebeeinrichtung werden vorzugsweise derart ausgelegt, dass in der häufig gefahrenen Overdrive-Übersetzung der größte Teil der über die Getriebevorrichtung 4 zu führenden Leistung nicht über den Variator 8 fließt.

Neben den in der Zeichnung dargestellten Ausführungen des Variators als Umschlingungs- oder Reibradvariator sind in Abhängigkeit des jeweils vorliegenden Anwendungsfalles auch andere geeignete Bauformen des Variators zur Darstellung der vorbeschriebenen Funktionalität des Variators einsetzbar.

### Bezugszeichen

1 Fahrzeugantriebsstrang
2 Antriebsmaschine
3 Anfahrelement
4 Getriebevorrichtung
5 Abtrieb
6 Schwingungsdämpfer
7 Planetengetriebeeinrichtung
8 Variator
9 Schaltgetriebeeinrichtung
10 Getriebeausgang
11 erste Welle der Planetengetriebeeinrichtung, Hohlrad
12 Getriebeeingangswelle
13 Planetenrad
14 zweite Welle der Planetengetriebeeinrichtung, Planetenträger
15 Getriebehauptwelle
15A erster Teil der Getriebehauptwelle
15B zweiter Teil der Getriebehauptwelle
16 dritte Welle der Planetengetriebeeinrichtung, Sonnenrad
17 bis 19 Zahnrad
20 Stirnradverzahnung
21 erste Welle des Variators
22 zweite Welle des Variators
23 Vorgelegewelle
24, 25 Schaltelement
26 bis 29 Losrad
30 weitere Vorgelegewelle
31 Zahnrad
32 Zwischenrad
33 bis 35 Zahnrad
36 zusätzliches Zahnrad
37 weiteres Zahnrad
38 weitere Stirnradverzahnung
39 erstes Stirnrad
40 zweites Stirnrad
41 bis 43 Schaltelement
44 bis 51 Losrad
52, 53 Hohlwelle
54 Zwischenrad
55, 56 Schaltelement
57 gehäusefestes Bauteil
58 bis 60 Losrad
61 bis 63 Zahnrad
64 Zwischenrad
65, 66 Schaltelement

## Patentansprüche

1. Stufenlose Getriebevorrichtung (4) eines Fahrzeugantriebsstranges (1) mit einem Variator (8) und einer Schaltgetriebeeinrichtung (9), mittels welchen Übersetzungen mehrerer Übersetzungsbereiche stufenlos darstellbar sind, und mit einer Planetengetriebeeinrichtung (7), die im Bereich einer ersten Welle (11) mit einem Getriebeeingang (12), im Bereich einer zweiten Welle (14) mit der Schaltgetriebeeinrichtung (9) und im Bereich einer dritten Welle (16) mit dem Variator (8) in Wirkverbindung steht, wobei ein zu übertragendes Drehmoment über wenigstens zwei Leistungspfade zwischen dem Getriebeeingang (12) und einem Getriebeausgang (10) führbar ist und der Variator (8) in einem der beiden Leistungspfade angeordnet ist, wobei die Schaltgetriebeeinrichtung (9) zwischen dem Variator (8) und einem Getriebeausgang (10) angeordnet ist, **dadurch gekennzeichnet , dass** das zu übertragende Drehmoment im Bereich der Planetengetriebeeinrichtung (7) zwischen den beiden Leistungspfaden aufteilbar und im Bereich der Schaltgetriebeeinrichtung (9) aufsummierbar ist.

2. Stufenlose Getriebevorrichtung nach Anspruch 1, dadurch **gekenn zeichnet** , dass der Variator (8) als Umschlingungs- oder als Reibradvariator ausgeführt ist.

3. Stufenlose Getriebevorrichtung nach Anspruch 1 oder 2, dadurch **ge kennzeichnet** , dass wenigstens eine der Variatorwellen (21) auf einer Getriebehauptwelle (15) angeordnet ist.

4. Stufenlose Getriebevorrichtung nach einem der Ansprüche 1 bis 3,
**dadurch gekennzeichnet , dass** die Schaltgetriebeeinrichtung (9) mit wenigstens einer Windungsgetriebeeinheit ausgeführt ist.

5. Stufenlose Getriebevorrichtung nach einem der Ansprüche 1 bis 4, **dadurch gekennzeichnet , dass** zur Umschaltung zwischen den Fahrbereichen formschlüssige Schaltelemente (24, 25; 41, 42, 43; 56, 65, 66) vorgesehen sind.

6. Stufenlose Getriebevorrichtung nach einem der Ansprüche 1 bis 5, **dadurch gekennzeichnet, dass** die Wirkverbindung zwischen der dritten Welle (16) der Planetengetriebeeinrichtung (7) und dem Variator (8) mit wenigstens einer Stirnradstufe (20) ausgebildet ist.

7. Stufenlose Getriebevorrichtung nach einem der Ansprüche 1 bis 6, **dadurch gekennzeichnet , dass** die dritte Welle (16) der Planetengetriebeeinrichtung (7) als Sonnenrad ausgeführt ist.

## Claims

1. Continuously variable transmission device (4) of a vehicle drivetrain (1), having a variator (8) and having a shift transmission unit (9) by means of which transmission ratios of a plurality of transmission ratio ranges can be realized in a continuously variable manner, and having a planetary gearing unit (7) which is operatively connected in the region of a first shaft (11) to a transmission input (12), in the region of a second shaft (14) to the shift transmission unit (9) and in the region of a third shaft (16) to the variator (8), wherein a torque to be transmitted can be conducted via at least two power paths between the transmission input (12) and a transmission output (10), and the variator (8) is arranged in one of the two power paths, wherein the shift transmission unit (9) is arranged between the variator (8) and a transmission output (10), **characterized in that** the torque to be transmitted can be apportioned between the two power paths in the region of the planetary gearing unit (7) and can be added in the region of the shift transmission unit (9).

2. Continuously variable transmission device according to Claim 1, **characterized in that** the variator (8) is designed as a wraparound or friction wheel variator.

3. Continuously variable transmission device according to Claim 1 or 2, **characterized in that** at least one of the variator shafts (21) is arranged on a transmission main shaft (15).

4. Continuously variable transmission device according to one of Claims 1 to 3, **characterized in that** the shift transmission device (9) is formed with at least one winding transmission unit.

5. Continuously variable transmission device according to one of Claims 1 to 4, **characterized in that** positively locking shift elements (24, 25; 41, 42, 43; 56, 65, 66) are provided for shifting between the drive ranges.

6. Continuously variable transmission device according to one of Claims 1 to 5, **characterized in that** the operative connection between the third shaft (16) of the planetary gearing unit (7) and the variator (8) is formed with at least one spur gear stage (20).

7. Continuously variable transmission device according to one of Claims 1 to 6, **characterized in that** the third shaft (16) of the planetary gearing unit (7) is designed as a sun gear.

## Revendications

1. Dispositif de transmission à variation continue (4) d'une chaîne cinématique d'un véhicule (1) comprenant un variateur (8) et un système de transmission à changement de vitesse (9), au moyen duquel des démultiplications de plusieurs plages de démultiplication peuvent être effectuées en continu, et comprenant un système de transmission planétaire (7) qui est en liaison fonctionnelle dans la région d'un premier arbre (11) avec une entrée de transmission (12), dans la région d'un deuxième arbre (14) avec le système de transmission à changement de vitesse (9) et dans la région d'un troisième arbre (16) avec le variateur (8), un couple à transmettre pouvant être transmis par le biais d'au moins deux voies de puissance entre l'entrée de transmission (12) et une sortie de transmission (10), et le variateur (8) étant disposé dans l'une des deux voies de puissance, le système de transmission à changement de vitesse (9) étant disposé entre le variateur (8) et une sortie de transmission (10), **caractérisé en ce que** le couple à transmettre peut être divisé entre les deux voies de puissance dans la région du système de transmission planétaire (7) et peut être additionné dans la région du système de transmission à changement de vitesse (9).

2. Dispositif de transmission à variation continue selon la revendication 1, **caractérisé en ce que** le variateur (8) est réalisé sous forme de variateur à courroie ou de variateur à roue de friction.

3. Dispositif de transmission à variation continue selon la revendication 1 ou 2, **caractérisé en ce qu'**au moins l'un des arbres du variateur (21) est disposé sur un arbre principal de la transmission (15).

4. Dispositif de transmission à variation continue selon l'une quelconque des revendications 1 à 3, **caractérisé en ce que** le système de transmission à changement de vitesse (9) est réalisé avec au moins une unité de transmission à enroulement.

5. Dispositif de transmission à variation continue selon l'une quelconque des revendications 1 à 4, **caractérisé en ce que** pour la commutation entre les plages de conduite, des éléments de commutation à engagement positif (24, 25 ; 41, 42, 43 ; 56, 65, 66) sont prévus.

6. Dispositif de transmission à variation continue selon l'une quelconque des revendications 1 à 5, **caractérisé en ce que** la liaison fonctionnelle entre le troisième arbre (16) du système de transmission planétaire (7) et le variateur (8) est réalisée avec au moins un étage à pignon droit (20).

7. Dispositif de transmission à variation continue selon l'une quelconque des revendications 1 à 6, **caractérisé en ce que** le troisième arbre (16) du système de transmission planétaire (7) est réalisé sous forme de roue solaire.
